# EUROPEAN PATENT SPECIFICATION

(11) **EP 2 060 186 B1**
(45) Date of publication and mention of the grant of the patent: **14.08.2013**
(21) Application number: 08169106.5
(22) Date of filing: 14.11.2008
(51) Int. Cl.: A23C 19/068, A23C 19/097

(54) **Process of microbiological sanification of the rind surface of gorgonzola d.o.p. cheese**
Verfahren zur mikrobiologischen Desinfektion der Rindenoberfläche von Gorgonzola-D.O.P.-Käse
Procédé pour l'assainissement microbiologique de la surface de la croûte de fromage gorgonzola d.o.p.

(30) Priority: 15.11.2007 IT TO20070822
(43) Date of publication of application: 20.05.2009
(73) Proprietor: Biraghi S.p.A., 12030 Cavallermaggiore (Cuneo) (IT)
(72) Inventor: Bisotti, Stefano, 29100 Piacenza (IT); Fontana, Mauro, 10147 Torino (IT)
(74) Representative: Buzzi, Franco

(56) References cited:
- WO-A-03/003845
- DE-A1- 1 932 476
- DE-C- 941 708
- MUCCHETTI ET AL: "Effect of washing with a high pressure water spray on removal of Listeria innocua from Gorgonzola cheese rind" FOOD CONTROL, BUTTERWORTH, LONDON, GB, vol. 19, no. 5, 12 November 2007 (2007-11-12), pages 521-525, XP022340036 ISSN: 0956-7135
- ENNAHAR ET AL.: "Elimination of Listeria monocytogenes in soft and red smear cheese by irradiation with low energy electrons" INTERNATIONAL JOURNAL OF FOOD SCIENCE AND TECHNOLOGY, vol. 29, no. 4, 1994, pages 395-403, XP002513089
- SULZER G ET AL: "Growth inhibition of Listeria spp. on Camembert cheese by bacteria producing inhibitory substances" INTERNATIONAL JOURNAL OF FOOD MICROBIOLOGY, ELSEVIER SCIENCE PUBLISHERS, AMSTERDAM, NL, vol. 14, no. 3-4, 1 December 1991 (1991-12-01), pages 287-296, XP002364257 ISSN: 0168-1605
- HASSANI ET AL: "Effect of a previous heat shock on the thermal resistance of Listeria monocytogenes and Pseudomonas aeruginosa at different pHs" INTERNATIONAL JOURNAL OF FOOD MICROBIOLOGY, ELSEVIER SCIENCE PUBLISHERS, AMSTERDAM, NL, vol. 116, no. 2, 29 March 2007 (2007-03-29), pages 228-238, XP022006159 ISSN: 0168-1605
- LOMONACO ET AL.: "Listeria monocytogenes in Gorgonzola: Subtypes, diversity and persistence over time" INTERNATIONAL JOURNAL OF FOOD MICROBIOLOGY, vol. 128, no. 3, 2009, pages 516-520, XP002513090

## Description

### Field of the invention

The present invention relates to a process of physical treatment for the sanification of the surface (rind) of Gorgonzola D.O.P. (Denominazione di Origine Protetta - Protected Designation of Origin) cheese.

More in particular, the invention relates to a process for the treatment of entire cheeses having the characteristics indicated in the Regulations for Production of the Consortium for Protection of Gorgonzola D.O.P. cheese, an extract of which appears hereinafter:
- average weight of the entire cheese: piquant type 9-12 kg; sweet type 10-13 kg; small type 6-8 kg, with variations, more or less, according to the technical conditions of production;
- height 13-20 cm with variations, more or less, according to the technical conditions of production and the length of seasoning;
- diameter 20-32 cm, with variations, more or less, according to the technical conditions of production and to the length of seasoning;
- rind: rough, grey and or pink, not edible;
- soft part: uniform, white or straw-coloured, streaky owing to the development of moulds (veining) with characteristic greenish-blue veins.

### Background of the invention

The chemical, physical, and rheological (structural) characteristics of the rind of Gorgonzola D.O.P., in addition to the environmental characteristics of humidity and temperature of the premises where the steps of ripening of Gorgonzola D.O.P occur, subsequent to production, render it a substrate that is particularly suited to the development of a wide variety of micro-organisms, amongst which in particular *Listeria monocytogenes.*

*Listeria monocytogenes* is a saprophytic micro-organism that is widely present in nature and ubiquitous in the environment, given that it has been isolated in the soil, in water, in vegetables, in waste waters, in the intestine and in the genital tract of healthy carriers. In the current state of the scientific art, it is considered responsible for sporadic severe infections in humans and in animals. It is invasive given that it is able to traverse the placenta and penetrate the central nervous system (giving rise to meningo-encephalitis); it is a facultative intracellular bacterium that is able to survive and grow in the majority of the cells of the infected host.

Belonging to the genus Listeria are six species: *L*. *monocytogenes, L. ivenovii, L. innocua, L. welshimeri, L. seegligeri* and *L*. *grayi.* Even though both *L*. *ivenovii* and *L. monocytogenes* are pathogens for the mouse, only *L. monocytogenes* is consistently associated to human pathology.

*Listeria monocytogenes* is a short non-capsulated Gram-positive bacillus, which is an asporigen, a facultative anaerobe, and a positive catalase, with a capacity to grow on the most common cultures within a wide range of temperatures. *L. monocytogenes* is mobile at temperatures of between 18°C and 22°C with a characteristic wide, oscillatory and rotary movement, and is immobile at 37°C; the dimensions are 1-4 µm/0.5 µm and can be observed at the microscope in short chains or small clumps.

The illness caused by *Listeria monocytogenes,* listeriosis, is a septicaemia of intestinal origin with the risk of fetusplacental infection and of meningo-encephalitis. In adults onset of the illness is by contact with infected material (meats, milk-based products, materials contaminated by faeces of infected animals) or by ingestion of contaminated foodstuffs.

The infective dose of Listeria is rather low: there are sufficient in fact 100 bacterial cells per gram of food to cause infection. The illness affects above all debilitated patients (immunodepressed subjects, patients with liver diseases, the elderly) and pregnant women. After an incubation of 3-8 days the illness manifests itself with fever (bacteriaemia), cephalea (meningo-encephalic forms). Other clinical manifestations are: internal and external localized abscesses, endocarditis, cutaneous lesions, granulomatous lesions of the liver and of other organs. Neonatal listeriosis may occur owing to transplacental passage of the micro-organism, in the cases of sepsis of the mother or owing to colonization of the genital tract and consequent infection of the fetus during parturition. Listeriosis in immunocompetent subjects is almost always limited to gastroenteric forms with nausea, vomiting, diarrhoea, and fever, a few hours after ingestion of contaminated foods, normally without neurological complications. The most active antibiotics seem to be ampicillin and gentamicin. Clinical failures do not necessarily indicate the failure of the therapy, since in many cases the therapy is initiated too late precisely on account of the difficulty of making a correct diagnosis. Listeriosis can be positively diagnosed only with isolation of the micro-organism from the blood, from the cephalorachidian liquid or from the faeces (even though the latter isolation is difficult and of limited diagnostic value). *L. monocytogenes* is an important pathogen also in veterinary medicine since it causes encephalitis, mastitis, and abortion in sheep and bovines and cases of infection contracted by the personnel that handles infected animals (Cain, 1986).

*Listeria monocytogenes* is considered a micro-organism that is an index of the wholesomeness of foodstuffs by the most recent European standards regarding hygiene of foodstuffs (Reg. 2073\05 CE).

Hence, in full respect of Good Practices of Hygiene and of Processing of the Product indicated also recently by scientific documents, which must in any case be applied, the risk of presence of *Listeria monocytogenes* on the rind of Gorgonzola is in any case particularly high, also considering the fact that, at temperatures of refrigeration of around 4°C, *Listeria monocytogenes* is still able to develop without finding any competition from other less dangerous micro-organisms that are naturally present and that, at these temperatures, survive but do not multiply.

### State of the prior art

In the light of the considerations expressed above, and taking into account the characteristics of the rind of Gorgonzola D.O.P., extremely favourable to the development of *Listeria monocytogenes,* which are at the basis of the non-edibility of the rind itself envisaged even by the Technical Regulations for the Production of Gorgonzola D.O.P. cheese, there have already been proposed processes tending to guarantee the wholesomeness of the product in full respect of the indications of the Technical Regulations of Production. Attempts in this direction, suggested in the past also by important University Bodies on behalf of the Consortium of Protection, have proven ineffective or at least not sufficiently reliable. In particular, methodologies of decontamination of the rind of Gorgonzola have been proposed via surface washing of ripe cheeses by means of jets of mains water under pressure (for example, from 20 to 90 bar) and possible ozonization, through the dosage of O₃ dissolved in water.

The results of said methodology, with particular reference to the removal of *Listeria monocytogenes* of the rind, have, however, proven extremely modest and in any case unreliable. In the case of medium and high levels of contamination, washing with water under pressure does not enable at all elimination of the presence of *Listeria monocytogenes,* as would instead be not only desirable but necessary.

The document "MUCCHETTI ET AL:"Effect of washing with a high pressure water spray on removal of Listeria innocua from Gorgonzola cheese rind", FOOD CONTROL, BUTTERWORTH, London GB, vol.19, No. 5, 12 November 2007, pages 521-525, discloses a method for removing undesired bacteria from Gorgonzola cheese rind using high pressure water sprays.

DE-1932476A1 discloses a method for preparing a cheese blend, wherein a blue-veined cheese such as Gorgonzola is treated with ethylene oxide, ultraviolet light, ultrasonic waves, an electromagnetic field of high frequency, or by heat pasteurisation.

### Summary of the invention

Consequently, a primary object of the invention is to make available a reliable process of microbiological sanification of the rind of Gorgonzola cheese that will be able to limit effectively the contamination by *Listeria monocytogenes* at levels that ensure complete wholesomeness of the product in terms of compliance to the indications of the Technical Regulations of Production and of the standards currently in force. According to the invention, the above object is achieved thanks to the process as defined principally in Claim 1, and secondarily in the subsequent subordinate claims.

The treatment of sanification forming the subject of the present invention uses exclusively the factor of temperature (hence performed on the finished product, without having effect at any level on the technical passages of the Regulations of Production such as those for D.O.P. cheeses), and is based upon the application of "low" and "high" temperatures and on the rapidity of the changes in temperature at successive times, for programmed intensities applied for a given time lapse, following upon application and alternation of which cells of *Listeria monocytogenes,* grown experimentally on the surface of the product and present in amounts higher than 1000 ucf/g, are devitalized.

The treatment consists in three successive steps, referred to as cold-pretreatment step, hot-treatment step, and cooling step. Proper application of the treatment moreover enables conservation of the physical characteristics of the treated product, without being the cause of important modifications and alterations of the characteristics of colour, composition, and general appearance of the rind, of the subrind and of the underlying product, and without causing damage either to veining of the soft internal part or to the organoleptic characteristics and intrinsic quality of the product.

The different temperatures on the surface of the product must be conveniently reached in a time lapse comprised between fifteen and thirty seconds from start of treatment, to reduce the possibility of the microorganisms present on the surface of the product having time to adapt to the high temperatures and enhance the effect of the final treatment temperatures. The intensity of the surface treatment in terms of heat applied on the surface in relation to the time of application may vary on the basis of the type and creaminess of the Gorgonzola D.O.P. undergoing treatment.

### Detailed description of the invention

The process according to the invention will now be described in greater detail with reference to the annexed drawing, which shows purely by way of nonlimiting example, in the form of a flowchart, the three successive steps of the thermal treatment.

Step 1 consists in a cold pre-treatment of the entire cylindrical Gorgonzola cheese of normalized dimensions, typically having a height of 13-20 cm, a diameter of 20-32 cm, and a weight between 6-8 kg and 10-13 kg, according to the type and with variations, more or less, according to the technical conditions of production and also to the length of seasoning.

In this step, the entire Gorgonzola cheese is subjected to a rapid cooling, in a time lapse comprised between 15 and 30 seconds, from room temperature to a temperature of cooling comprised between 0°C and 2°C, applied for a time sufficiently long as to guarantee that the surface of the product, down to a depth in the region of 4 mm, reaches these values. The period of exposure to the cooling temperature may range from 30 min to 240 min, according to the type of the product and its creaminess.

The rapid cooling is conducted by means of a forced flow of cold air in a tunnel or in a forced-cold-air-recirculation refrigerator, so as to limit to the minimum the period of compensation of the temperature of the entire cheese with the temperature of the environment. Particularly indicated are commercially available liquid-nitrogen refrigeration motors for maintaining the temperature of the recirculating air. In this step, no part of the product must be subjected to freezing. Freezing, in fact, is a practice not allowed by the bodies for control of Gorgonzola D.O.P. In Step 2, the product is then subjected to rapid heating, also in this case within a time lapse comprised between 15 and 30 seconds, up to heating temperatures comprised between 80°C and 85°C. The rapidity of the heating is a synergistic factor at the high temperatures that are reached to obtain a better effect on the inactivation of the undesirable microorganisms, and is obtained through the use of IR lamps having the characteristics described hereinafter. The intensity of the surface treatment in terms of heat applied to the surface in relation to the time of application can vary on the basis of the type and creaminess of the Gorgonzola D.O.P undergoing treatment: in general, IR irradiation will be comprised between 5 and 120 seconds for each square centimetre of the surface of the product.

In order to favour a high power of penetration of the IR irradiation through the superficial layer of the product, the invention envisages the use of radiant lamps.

Preferably, the IR lamp used in the present application consists in a 1500-W 230-V quartz tubular radiant element, which emits a radiation in the medium waveband (1200-3000 nm), with a spectrum of emission that has a peak at 2300 nm.

The tubular radiant element is advantageously fixed to an aluminium parabola with a high reflecting power and is suited to operation in a horizontal suspended position.

The preferred technical characteristics appear in the following table:

| Power | From 1500 to 3000 W |
|---|---|
| Supply voltage | 230 V |
| Positioning | Horizontal and vertical |
| Treatment times for cm² of surface of the product | 5 - 20 s |

After IR irradiation and after obtaining the change in temperature to 80°C-85°C of the surface part of the Gorgonzola, this step is then followed by Step 3, in which a final rapid cooling to a temperature of between 2°C and 4°C is produced, also in this case in a time lapse comprised between 15 and 30 seconds and in a forced-air tunnel or cell.

The time of permanence of the entire Gorgonzola cheese at the final cooling temperature is conveniently comprised between 30 min and 240 min according to the type of product and its creaminess.

### Effects of the invention

Tests conducted by the present applicant have made it possible to ascertain that the entire Gorgonzola D.O.P. cheeses subjected to the process of treatment according to the invention prove, for the purposes of sanification of the rind, altogether in line with the requisites of wholesomeness prescribed by the standards currently in force.

The tests were conducted at the test, research and development laboratory of Biraghi S.p.A.: said laboratory is enrolled in the Register of Highly Qualified Laboratories of the Italian Ministry for the University and Research (MUR).

The results obtained for sanification of the surface of the entire cheeses, for the different types of bacteria taken into consideration inoculated on the surface of the entire cheeses and made to develop at controlled temperatures, before and after treatment, are indicated in the table below:

| **Micro-organism** | **Log of reduction after treatment** | **Method** |
|---|---|---|
| *E. coli*/*g* | 4 | AFNOR N°C 3M 01/8-06-2001 |
| *S. aureus*/*g* | 4 | UNI 10984-2 |
| *L. monocytogenes*/*g* | 4 | ISO 11290-2 |
| *L. monocytogenes*/*25 g* | Absent | ISO 11290-1 |

No significant differences were noted in the product before and after the treatment of sanification according to the invention either from the chemical-physical standpoint or from the organoleptic the standpoint.

Of course, without prejudice to the principle of the invention, the details of the process may vary with respect to what is described purely by way of example, without thereby departing from the scope of the present invention as defined in the ensuing claims.

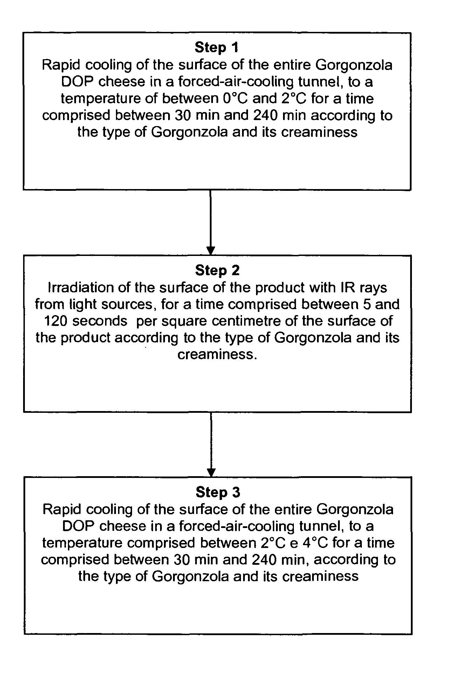

## Claims

1. A process of microbiological sanification of the rind surface of Gorgonzola D.O.P. cheese, **characterized in that** it consists in subjecting the entire cheese to a thermal treatment including the following succession of steps:
- cold pre-treatment by means of cooling in a time lapse in the range of 15-30 seconds to a temperature in the range between 0°C and 2°C;
- hot treatment by means of heating in a time lapse in the range of 15-30 seconds to a temperature in the range between 80°C and 85°C; and
- final cooling in a time lapse in the range of 15-30 seconds to a temperature in the range between 2°C and 4°C.

2. The process according to Claim 1, **characterized in that** the step of hot treatment is implemented by means of IR irradiation.

3. The process according to Claim 2, **characterized in that** for the IR irradiation radiant-lamp means in the medium waveband are used.

4. The process according to Claim 2 or Claim 3, **characterized in that** the step of hot treatment is implemented for a time comprised between 5 and 120 seconds per square centimetre of the surface of the cheese, according to the type and creaminess of the Gorgonzola.

5. The process according to Claim 1, **characterized in that** the step of cold pre-treatment is implemented by means of a flow of cold air.

6. The process according to Claim 5, **characterized in that** the step of cold pre-treatment is performed in a forced-cold-air cooling tunnel.

7. The process according to Claim 5, **characterized in that** the step of cold pre-treatment is performed in a forced-cold-air-recirculation refrigerator.

8. The process according to any one of Claims 5 to 7, **characterized in that** the step of cold pre-treatment is implemented for a time comprised between 30 min and 240 min, according to the type of Gorgonzola and its creaminess.

9. The process according to Claim 1, **characterized in that** the step of final cooling is implemented by means of a flow of cold air.

10. The process according to Claim 9, **characterized in that** the step of final cooling is performed in a forced-cold-air cooling tunnel.

11. The process according to Claim 9, **characterized in that** the step of final cooling is performed in a forced-cold-air-recirculation refrigerator.

12. The process according to any one of Claims 9 to 11, **characterized in that** the step of final cooling is implemented for a time comprised between 30 min and 240 min, according to the type of Gorgonzola and its creaminess.

13. The process according to one or more of the preceding claims, **characterized in that** the each of the steps of cold pre-treatment, hot treatment, and final cooling is performed by reaching the respective treatment temperatures in a time lapse comprised between 15 and 30 seconds.

## Patentansprüche

1. Verfahren zur mikrobiologischen Reinigung bzw. Sterilisierung der Rindenoberfläche des Käses Gorgonzola D.O.P., **dadurch gekennzeichnet, dass** es darin besteht, dass der ganze Käse einer Wärmebehandlung unterzogen wird, die die nachfolgende Abfolge von Schritten beinhaltet:
eine Kältevorbehandlung mittels Kühlen in einer Zeitspanne in dem Bereich von 15 bis 30 s auf eine Temperatur in dem Bereich zwischen 0 °C und 2 °C;
eine Wärmebehandlung mittels Erwärmen in einer Zeitspanne in dem Bereich von 15 bis 30 s auf eine Temperatur in dem Bereich zwischen 80 °C und 85 °C; und
ein abschließendes Kühlen in einer Zeitspanne in dem Bereich von 15 bis 30 s auf eine Temperatur in dem Bereich zwischen 2 °C und 4 °C.

2. Verfahren nach Anspruch 1, **dadurch gekennzeichnet, dass** der Schritt der Wärmebehandlung mittels einer IR-Bestrahlung implementiert wird.

3. Verfahren nach Anspruch 2, **dadurch gekennzeichnet, dass** für die IR-Bestrahlung Strahllampenmittel im mittleren Wellenband verwendet werden.

4. Verfahren nach Anspruch 2 oder 3, **dadurch gekennzeichnet, dass** der Schritt der Wärmebehandlung für eine Zeit implementiert wird, die zwischen 5 und 120 s pro Quadratzentimeter der Oberfläche des Käses entsprechend dem Typ und der Cremigkeit des Gorgonzola umfasst ist.

5. Verfahren nach Anspruch 1, **dadurch gekennzeichnet, dass** der Schritt der Kältevorbehandlung mittels eines Kaltluftstromes implementiert wird.

6. Verfahren nach Anspruch 5, **dadurch gekennzeichnet, dass** der Schritt der Kältevorbehandlung in einem Zwangskaltluftkühltunnel durchgeführt wird.

7. Verfahren nach Anspruch 5, **dadurch gekennzeichnet, dass** der Schritt der Kältevorbehandlung in einer Zwangskaltluftrezirkulationskühlanlage durchgeführt wird.

8. Verfahren nach einem der Ansprüche 5 bis 7, **dadurch gekennzeichnet, dass** der Schritt der Kältevorbehandlung für eine Zeit implementiert wird, die zwischen 30 min und 240 min entsprechend dem Typ von Gorgonzola und dessen Cremigkeit umfasst ist.

9. Verfahren nach Anspruch 1, **dadurch gekennzeichnet, dass** der Schritt des abschließenden Kühlens mittels eines Kaltluftstromes implementiert wird.

10. Verfahren nach Anspruch 9, **dadurch gekennzeichnet, dass** der Schritt des abschließenden Kühlens in einem Zwangskaltluftkühltunnel durchgeführt wird.

11. Verfahren nach Anspruch 9, **dadurch gekennzeichnet, dass** der Schritt des abschließenden Kühlens in einer Zwangskaltluftrezirkulationskühlanlage durchgeführt wird.

12. Verfahren nach einem der Ansprüche 9 bis 11, **dadurch gekennzeichnet, dass** der Schritt des abschließende Kühlens für eine Zeit implementiert wird, die zwischen 30 min und 240 min entsprechend dem Typ von Gorgonzola und dessen Cremigkeit umfasst ist,.

13. Verfahren nach einem oder mehreren der vorhergehenden Ansprüche, **dadurch gekennzeichnet, dass** jeder der Schritte der Kältevorbehandlung, der Wärmebehandlung und der abschließenden Kühlung durch Erreichen der jeweiligen Behandlungstemperaturen in einer Zeitspanne durchgeführt wird, die zwischen 15 und 30 s umfasst ist.

## Revendications

1. Procédé de stérilisation microbiologique de la surface de croûte du fromage Gorgonzola D.O.P., **caractérisé en ce qu'**il consiste à soumettre tout le fromage à un traitement thermique comprenant la succession d'étapes suivante :
- prétraitement à froid par refroidissement en un laps de temps dans la plage de 15 à 30 secondes à une température dans la plage de 0 à 2 °C ;
- traitement à chaud par chauffage en un laps de temps dans la plage de 15 à 30 secondes à une température dans la plage de 80 à 85 °C ; et
- refroidissement final en un laps de temps dans la plage de 15 à 30 secondes à une température dans la plage de 2 à 4 °C.

2. Procédé selon la revendication 1, **caractérisé en ce que** l'étape de traitement à chaud est mise en oeuvre par irradiation IR.

3. Procédé selon la revendication 2, **caractérisé en ce que**, pour l'irradiation IR, des moyens de lampes rayonnantes dans la gamme d'ondes médiane sont utilisés.

4. Procédé selon la revendication 2 ou la revendication 3, **caractérisé en ce que** l'étape de traitement à chaud est mise en oeuvre pendant un temps compris entre 5 et 120 secondes par centimètre carré de la surface du fromage, selon le type et la crémosité du Gorgonzola.

5. Procédé selon la revendication 1, **caractérisé en ce que** l'étape de prétraitement à froid est mise en oeuvre au moyen d'un courant d'air froid.

6. Procédé selon la revendication 5, **caractérisé en ce que** l'étape de prétraitement à froid est mise en oeuvre dans un tunnel de refroidissement par air froid forcé.

7. Procédé selon la revendication 5, **caractérisé en ce que** l'étape de prétraitement à froid est mise en oeuvre dans un réfrigérateur à recirculation d'air froid forcé.

8. Procédé selon l'une quelconque des revendications 5 à 7, **caractérisé en ce que** l'étape de prétraitement à froid est mise en oeuvre pendant un temps compris entre 30 et 240 min, selon le type de Gorgonzola et sa crémosité.

9. Procédé selon la revendication 1, **caractérisé en ce que** l'étape de refroidissement final est mise en oeuvre au moyen d'un courant d'air froid.

10. Procédé selon la revendication 9, **caractérisé en ce que** l'étape de refroidissement final est mise en oeuvre dans un tunnel de refroidissement par air froid forcé.

11. Procédé selon la revendication 9, **caractérisé en ce que** l'étape de refroidissement final est mise en oeuvre dans un réfrigérateur à recirculation d'air froid forcé.

12. Procédé selon l'une quelconque des revendications 9 à 11, **caractérisé en ce que** l'étape de refroidissement final est mise en oeuvre pendant un temps compris entre 30 et 240 min, selon le type de Gorgonzola et sa crémosité.

13. Procédé selon une ou plusieurs des revendications précédentes, **caractérisé en ce que** chacune des étapes de prétraitement à froid, traitement à chaud, et refroidissement final est réalisée en atteignant les températures de traitement respectives en un laps de temps compris entre 15 et 30 secondes.
